# EUROPEAN PATENT APPLICATION

(11) **EP 4 575 288 A1**
(43) Date of publication of application: **25.06.2025**
(21) Application number: 24824475.8
(22) Date of filing: 08.07.2024
(51) Int. Cl.: F16L 9/14, C08L 23/00, C08L 23/08, C09D 123/06, C09J 123/06, B32B 15/085

(54) **WATER HEATER INNER TANK, AND PREPARATION METHOD THEREFOR AND USE THEREOF**

(30) Priority: 24.10.2023 CN 202311394319
(71) Applicant: Wuhu Midea Smart Kitchen Appliance Manufacturing Co., Ltd., Wuhu, Anhui 241000 (CN)
(72) Inventor: YANG, Yong, Wuhu, Anhui 241000 (CN); XIN, Sensen, Wuhu, Anhui 241000 (CN); SONG, Ruilun, Wuhu, Anhui 241000 (CN); SHEN, Yongbing, Wuhu, Anhui 241000 (CN)
(74) Representative: RGTH
(86) International application number: PCT/CN2024/104315
(87) International publication number: WO 2025/086719

(57) **Abstract**

The present disclosure discloses a water heater inner tank and a preparation method and use thereof. The water heater inner tank includes a metallic pressure-bearing layer, a polyethylene bonding layer, and a heat-resistant organic polymer anticorrosion layer. The polyethylene bonding layer is disposed on an inner side of the metallic pressure-bearing layer and formed by polyethylene blends. The polyethylene blends include 80 to 120 parts by weight of polyethylene base resin, 2 to 15 parts by weight of a polar material, and 0.1 to 1 part by weight of an antioxidant. The heat-resistant organic polymer anticorrosion layer is disposed on a side of the polyethylene bonding layer away from the metallic pressure-bearing layer. The polyethylene bonding layer and heat-resistant organic polymer anticorrosion layer of the water heater inner tank of the present disclosure are free of pungent odor and can meet safety and hygiene requirements for bathing water. At the same time, a bonding between the metallic pressure-bearing layer and the polyethylene bonding layer of the water heater inner tank is strong, and no delamination occurs during use, thereby meeting service life requirements for the water heater inner tank.

## Description

### CROSS-REFERENCE TO RELATED APPLICATION

The present application claims priority and rights to Chinese Patent Application No. 202311394319.2, filed with China National Intellectual Property Administration on October, 24, 2023, the entire disclosure of which is incorporated herein by reference.

### FIELD

The present disclosure relates to the technical field of water heater material, and particularly, to a water heater inner tank, a preparation method and use thereof.

### BACKGROUND

Currently, most of electric water heaters and solar water heaters use enameled inner tank. Since hydrogen evolution is likely to occur on a steel plate of the enameled inner tank and results in fish scale defects, deteriorating the adhesion of steel plate, and leading to the problems such as shrinkage holes or sand holes at a welding seam. Moreover, the enameled inner tank is made of a brittle material, which may be easily damaged during transportation. Therefore, it is necessary to protect the inner tank with use a magnesium rod. However, the magnesium rod may likely produce magnesium slag during the use, which may accelerate the formation of scale and pollute water quality. The long-term use of the magnesium rod may also cause irritation to a user's skin. In order to solve the above problems, a steel-plastic composite inner tank is produced using peroxide crosslinked polyethylene (PEXₐ) through rotational molding in the related art. The steel-plastic composite inner tank has both pressure-bearing capacity of the steel material and anticorrosion performance of the PEXₐ inner lining, without requiring the protection of the magnesium rod, and thus can provide better water quality. However, PEXₐ raw materials for steel lining rotational molding have the following problems. 1) The raw materials have poor polarity. Even the steel surface is subjected to a complex surface treatment such as phosphating, a bonding strength between the steel-plastic composite and the PEXₐ inner lining is still low, and thus delamination may easily occur. 2) A peroxide crosslinking agent used during a crosslinking creation of a conventional rotational molded PEXₐ inner lining may decompose and produce pungent odor after the crosslinking reaction, which is a major problem in the related art currently.

### SUMMARY

The present disclosure aims to solve one of the technical problems in the related art at least to some extent. To this end, objects of the present disclosure are to provide a water heater inner tank, a preparation method and use thereof. A polyethylene bonding layer and a heat-resistant organic polymer anticorrosion layer of the water heater inner tank of the present disclosure are free of pungent odor and can meet safety and hygiene requirements for bathing water. At the same time, a metallic pressure-bearing layer and the polyethylene bonding layer of the water heater inner tank have strong bonding therebetween, without the occurrence of delamination during use, thereby meeting the requirements on the service life of the water heater inner tank.

In an aspect, the present disclosure provides a water heater inner tank. According to embodiments of the present disclosure, the water heater inner tank comprises a metallic pressure-bearing layer, a polyethylene bonding layer, and a heat-resistant organic polymer anticorrosion layer. The polyethylene bonding layer is disposed on an inner side of the metallic pressure-bearing layer and formed by a polyethylene blend. The polyethylene blend comprise 80 to 120 parts by weight of polyethylene base resin, 2 to 15 parts by weight of a polar material, and 0.1 to 1 part by weight of an antioxidant. The heat-resistant organic polymer anticorrosion layer is disposed on a side of the polyethylene bonding layer away from the metallic pressure-bearing layer.

In the water heater inner tank according to the embodiments of the present disclosure, a crosslinking agent is no longer added into the polyethylene bonding layer, thereby solving the problem of pungent odor, which is caused by adding the crosslinking agent into the PEXₐ layer in the related art. As a result, the polyethylene bonding layer meets the hygiene and safety requirements for the water heater inner tank. At the same time, in the present disclosure, since the heat-resistant organic polymer anticorrosion layer is disposed on the inner side of the polyethylene bonding layer, the heat-resistant performance of the heat-resistant organic polymer anticorrosion layer can meet a use standard of the water heater, and the heat-resistant organic polymer anticorrosion layer also meets the hygiene and safety requirements for the water heater inner tank. In the present disclosure, the polyethylene bonding layer with good bonding performance serves as the bonding layer and is connected between the metallic pressure-bearing layer and the heat-resistant organic polymer anticorrosion layer, ensuring a bonding strength between the metallic pressure-bearing layer and the heat-resistant organic polymer anticorrosion layer, and avoiding delamination of the polyethylene bonding layer and the heat-resistant organic polymer anticorrosion layer during the use. In addition, in the present disclosure, the polyethylene blends are added with the polar material, which improves the bonding between the polyethylene bonding layer and the metallic pressure-bearing layer. As a result, the metallic pressure-bearing layer can meet the required bonding strength for use merely by performing a simple degreasing step, without requiring complicated sandblasting, pickling, phosphating, etc. In this way, a peel strength between the metallic pressure-bearing layer and the polyethylene bonding layer reaches 285 N/cm to 380 N/cm, without the occurrence of delamination during the use, thereby meeting the service life requirements for the water heater inner tank.

In addition, the water heater inner tank according to the above-mentioned embodiments of the present disclosure can also have the following additional technical features.

In some embodiments of the present disclosure, a material of the heat-resistant organic polymer anticorrosion layer comprises at least one of polypropylene, polybutylene, and polycarbonate.

In some embodiments of the present disclosure, a thickness ratio of the polyethylene bonding layer to the heat-resistant organic polymer anticorrosion layer is (0.5 to 1.5):(1 to 2).

In some embodiments of the present disclosure, the polyethylene bonding layer has a thickness ranging from 0.5 mm to 1.5 mm.

In some embodiments of the present disclosure, the heat-resistant organic polymer anticorrosion layer has a thickness ranging from 1 mm to 2 mm.

In some embodiments of the present disclosure, the metallic pressure-bearing layer has a thickness ranging from 1 mm to 2 mm.

In some embodiments of the present disclosure, the polar material comprises at least one of isocyanate, acrylate, unsaturated carboxylic acid, polyolefin grafted with anhydride or ester derivative, epoxy resin, and unsaturated polyester resin.

In some embodiments of the present disclosure, the antioxidant comprises at least one of pentaerythritol tetrakis[β-(3,5-di-tert-butyl-4-hydroxyphenyl)propionate) and 4,4'-thiobis(6-tert-butyl-3-methyl)phenol.

In some embodiments of the present disclosure, a peel strength between the metallic pressure-bearing layer and the polyethylene bonding layer ranges from 285 N/cm to 380 N/cm.

In another aspect, the present disclosure provides a method for preparing the above-mentioned water heater inner tank. According to embodiments of the present disclosure, the method comprises: (1) pretreating the metallic pressure-bearing layer; (2) loading the polyethylene blends onto an inner side of the metallic pressure-bearing layer, placing into a rotational molding machine, and performing rotational molding, to form the polyethylene bonding layer on the inner side of the metallic pressure-bearing layer; and (3) loading a material of the heat-resistant organic polymer anticorrosion layer onto an inner side of the polyethylene bonding layer, placing into the rotational molding machine, and performing rotational molding, to form the heat-resistant organic polymer anticorrosion layer on the inner side of the polyethylene bonding layer.

In the method for preparing the above-mentioned water heater inner tank according to the embodiments of the present disclosure, the prepared polyethylene bonding layer and heat-resistant organic polymer anticorrosion layer of the water heater inner tank are free of the pungent odor and can meet safety and hygiene requirements for bathing water. At the same time, due to the strong bonding between the metallic pressure-bearing layer and the polyethylene bonding layer of the water heater inner tank, no delamination occurs during the use, thereby meeting the service life requirements for the water heater inner tank. Moreover, the method is simple and easy to implement.

In addition, the method for preparing the water heater inner tank according to the above-mentioned embodiments of the present disclosure can also have the following additional technical features.

In some embodiments of the present disclosure, in the step (2), a temperature of the rotational molding ranges from 220°C to 280°C, and a duration of the rotational molding ranges from 15 minutes to 35 minutes.

In some embodiments of the present disclosure, in the step (3), a temperature of the rotational molding ranges from 220°C to 280°C, and a duration of the rotational molding ranges from 15 minutes to 35 minutes.

In a third aspect, the present disclosure provides a water heater. According to the embodiments of the present disclosure, the water heater comprises the water heater inner tank according to the above embodiments or a water heater inner tank prepared by the method according to the above embodiments. Thus, the water heater has all the advantages of the water heater inner tank according to the above embodiments. Specifically, the polyethylene bonding layer and the heat-resistant organic polymer anticorrosive layer of the water heater inner tank of the water heater have no pungent odor, which can meet the safety and hygiene requirements for the bathing water. At the same time, due to the strong bonding between the metallic pressure-bearing layer and the polyethylene bonding layer of the water heater inner tank, no delamination occurs during the use, thereby meeting the service life requirements for the water heater inner tank. In this way, the consumers' needs can be further met.

Additional aspects and advantages of the embodiments of the present disclosure will be provided at least in part in the following description, or will become apparent in part from the following description, or can be learned from the practice of the embodiments of the present disclosure.

### BRIEF DESCRIPTION OF THE DRAWINGS

The above-mentioned and/or other aspects and advantages of embodiments of the present disclosure will become apparent and more readily appreciated from the following descriptions made with reference to the accompanying drawings.
FIG. 1 is a schematic structural diagram of a water heater inner tank according to an embodiment of the present disclosure.
FIG. 2 is a schematic flowchart of a method for preparing a water heater inner tank according to an embodiment of the present disclosure.

### DETAILED DESCRIPTION

The embodiments of the present disclosure will be described in detail below with reference to examples as illustrated in the accompanying drawings, throughout which same or similar elements, or elements having same or similar functions, are denoted by same or similar reference numerals. The embodiments described below with reference to the drawings are illustrative and intended to explain, rather than limiting, the present disclosure.

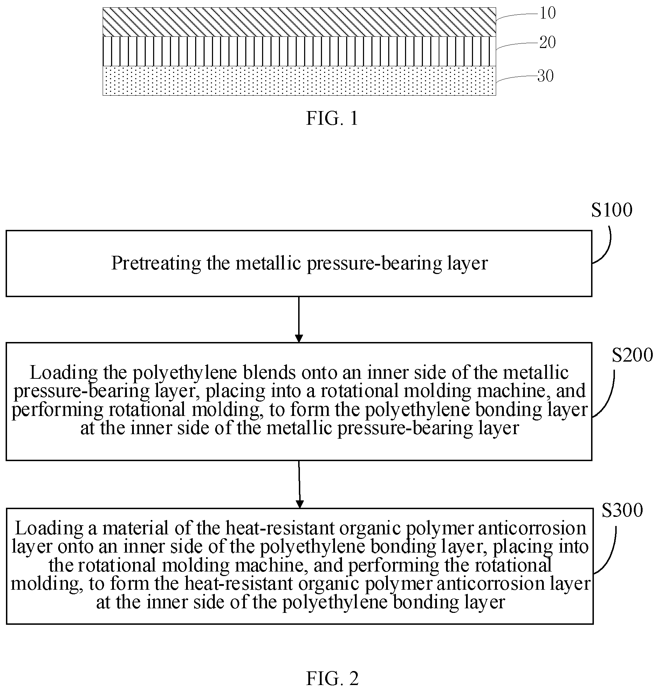

In an aspect, the present disclosure provides a water heater inner tank. According to embodiments of the present disclosure, with reference to FIG. 1, the water heater inner tank comprises a metallic pressure-bearing layer 10, a polyethylene bonding layer 20, and a heat-resistant organic polymer anticorrosion layer 30. The polyethylene bonding layer 20 is disposed on an inner side of the metallic pressure-bearing layer 10 and formed by heating polyethylene blends. The polyethylene blends comprise 80 to 120 parts by weight of polyethylene base resin, 2 to 15 parts by weight of a polar material, and 0.1 to 1 part by weight of an antioxidant. The heat-resistant organic polymer anticorrosion layer 30 is disposed on a side of the polyethylene bonding layer 20 away from the metallic pressure-bearing layer 10. In this way, in the present disclosure, a crosslinking agent is no longer added into the polyethylene bonding layer, thereby solving the problem of pungent odor, which is caused by adding the crosslinking agent into a PEX layer in the related art. As a result, the polyethylene bonding layer meets the hygiene and safety requirements for the water heater inner tank. At the same time, in the present disclosure, since the heat-resistant organic polymer anticorrosion layer is disposed on the inner side of the polyethylene bonding layer, the heat-resistant performance of the heat-resistant organic polymer anticorrosion layer can meet a use standard of the water heater, and the heat-resistant organic polymer anticorrosion layer also meets the hygiene and safety requirements for the water heater inner tank. In the present disclosure, the polyethylene bonding layer with good bonding performance serves as the bonding layer and is connected between the metallic pressure-bearing layer and the heat-resistant organic polymer anticorrosion layer, ensuring a bonding strength between the metallic pressure-bearing layer and the heat-resistant organic polymer anticorrosion layer, and avoiding delamination of the polyethylene bonding layer and the heat-resistant organic polymer anticorrosion layer during the use. In addition, in the present disclosure, the polyethylene blends are added with the polar material, which improves bonding between the polyethylene bonding layer and the metallic pressure-bearing layer. As a result, the metallic pressure-bearing layer can meet the required bonding strength for use merely by performing a simple degreasing step, without requiring complicated sandblasting, pickling, phosphating, etc. In this way, a peel strength between the metallic pressure-bearing layer and the polyethylene bonding layer reaches 285 N/cm to 380 N/cm, without the occurrence of delamination during the use, thereby meeting the service life requirements for the water heater inner tank.

The principle by which the water heater inner tank according to the present disclosure can achieve the above-mentioned beneficial effects will be described in detail below.

In the related art, peroxide crosslinked polyethylene (PEXₐ) is used to prepare a steel-plastic composite inner tank through rotational molding, which has both pressure-bearing capacity of the steel material and anticorrosion performance of the PEXₐ inner lining. In the process of forming of the PEXₐ inner lining, since heat resistance of the polyethylene base resin does not meet a use standard of the water heater, a crosslinking agent is required to induce a crosslinking reaction of the polyethylene base resin under certain conditions to form a crosslinked polyethylene inner lining. A peroxide crosslinking agent is usually used in the related art. The crosslinking agent will decompose and produce pungent odor after a heating reaction. For example, dicumyl peroxide (DCP) may likely decompose into gases such as acetophenone, methane, and 2-phenylpropan-2-ol, and particularly, acetophenone may cause serious irritation to human eyes or respiratory tracts. Bis(tert-butyl) peroxide (BIBP) may likely decompose into steam such as tert-butyl alcohol and acetone. Such a problem is currently urgent in the related art. Those skilled in the art have tried many methods, but none of them can effectively solve the pungent odor problem.

In order to solve the above technical problems, the crosslinking agent is no longer added into the polyethylene bonding layer in the present disclosure, thereby solving the problem of pungent odor, which is caused by adding the crosslinking agent into the PEXₐ layer in the related art. As a result, the polyethylene bonding layer meets the hygiene and safety requirements for the water heater inner tank. At the same time, in order to solve the problem that the heat resistance of the polyethylene basic resin does not meet the use standard of the water heater, the heat-resistant organic polymer anticorrosion layer is disposed on the inner side of the polyethylene bonding layer in the present disclosure. The heat-resistant organic polymer anticorrosion layer can resist a temperature up to 95°C for a long term, meeting the requirement of long-term use at a temperature ranging from 80°C to 85°C. In addition, the heat resistance of the heat-resistant organic polymer anticorrosion layer can meet the use standard of the water heater. The heat-resistant organic polymer anticorrosion layer can exert an effect of blocking water from permeating and contacting the metallic pressure-bearing layer, thereby providing better anticorrosion performance for metallic components. In addition, no crosslinking agent is used in the heat-resistant organic polymer anticorrosion layer, and the problem of pungent odor caused by the crosslinking agent does not exist. Therefore, the heat-resistant organic polymer anticorrosion layer also meets the hygiene and safety requirements of the water heater inner tank. However, the bonding between the heat-resistant organic polymer anticorrosion layer and the metallic pressure-bearing layer is relatively poor. In order to solve such a problem, the polyethylene bonding layer with better bonding performance is used as the bonding layer in the present disclosure and is connected between the metallic pressure-bearing layer and the heat-resistant organic polymer anticorrosion layer, ensuring a bonding strength between the metallic pressure-bearing layer and the heat-resistant organic polymer anticorrosion layer, and avoiding delamination of the polyethylene bonding layer and the heat-resistant organic polymer anticorrosion layer during the use.

In order to further ensure the bonding strength between the metallic pressure-bearing layer and the heat-resistant organic polymer anticorrosion layer, the polyethylene blends are added with the polar material in the present disclosure. The polar material has polar groups, which can react with hydroxyl groups on the metallic pressure-bearing layer to form chemical bonds, thereby improving the bonding between the polyethylene bonding layer and the metallic pressure-bearing layer. As a result, the metallic pressure-bearing layer can have the required bonding strength for use merely by performing a simple degreasing step, without requiring complicated sandblasting, pickling, phosphating, etc. In this way, a peel strength between the metallic pressure-bearing layer and the polyethylene bonding layer reaches 285 N/cm to 380 N/cm, without the occurrence of delamination during the use, thereby meeting the service life requirements for the water heater inner tank.

In the embodiments of the present disclosure, a material of the heat-resistant organic polymer anticorrosion layer is not particularly limited, as long as the heat resistance and the hygiene and safety performance of the heat-resistant organic polymer anticorrosion layer can meet the use standard of the water heater inner tank. According to some specific embodiments of the present disclosure, the material of the heat-resistant organic polymer anticorrosion layer comprises at least one of polypropylene, polybutylene, and polycarbonate. The heat-resistant organic polymer anticorrosion layer formed by the above-mentioned material can not only meet the use standard for the heat resistance of the water heater inner tank, but also meet the use requirements for the hygiene and safety of the water heater inner tank.

According to some further specific embodiments of the present disclosure, a thickness ratio of the polyethylene bonding layer to the heat-resistant organic polymer anticorrosion layer is (0.5 to 1.5):(1 to 2). Therefore, the bonding strength between the metallic pressure-bearing layer and the heat-resistant organic polymer anticorrosion layer can be further ensured, which further avoids delamination between the metallic pressure-bearing layer and the heat-resistant organic polymer anticorrosion layer.

As some specific examples, the polyethylene bonding layer may have a thickness ranging from 0.5 mm to 1.5 mm (for example, 0.5 mm/0.7 mm/0.9 mm/1.0 mm/1.2 mm/1.3 mm/1.5 mm). As some specific examples, the heat-resistant organic polymer anticorrosion layer may have a thickness ranging from 1 mm to 2 mm (for example, 1 mm/1.2 mm/1.4 mm/1.6 mm/1.8 mm/2 mm). As some specific examples, the metallic pressure-bearing layer may have a thickness ranging from 1 mm to 2 mm (for example, 1 mm/1.2 mm/1.4 mm/1.6 mm/1.8 mm/2 mm).

In embodiments of the present disclosure, a specific type of the above-mentioned polar material is not particularly limited. As some specific examples, the polar material comprises, but is not limited to, at least one of isocyanate, acrylate, unsaturated carboxylic acid, polyolefin grafted with anhydride or an ester derivative, epoxy resin, and an unsaturated polyester resin. Both the epoxy resin and the unsaturated polyester resin contain polar groups, which can react with the hydroxyl groups on the metallic pressure-bearing layer to form chemical bonds, thereby improving bonding between a polyethylene (PE) inner lining and the metallic pressure-bearing layer. The polar material formed by grafting polyolefin with isocyanate, acrylate, unsaturated carboxylic acid, anhydride, or ester derivative also contains polar groups, which can react with the hydroxyl groups on the metallic pressure-bearing layer to form chemical bonds, thereby improving the bonding between the polyethylene bonding layer and the metallic pressure-bearing layer. A grafting rate of polyolefin is not particularly limited and is generally selected from 1% to 10%.

In embodiments of the present disclosure, the antioxidant effects to prevent the oxidation aging of the polyethylene bonding layer. The specific type of the above-mentioned antioxidant is not particularly limited. As some specific examples, the antioxidant comprises, but is not limited to, at least one of pentaerythritol tetrakis[β-(3,5-di-tert-butyl-4-hydroxyphenyl)propionate) and 4,4'-thiobis(6-tert-butyl-3-methyl)phenol.

In embodiments of the present disclosure, a specific material of the above-mentioned metallic pressure-bearing layer is not particularly limited, for example, it may be a carbon steel pressure-bearing layer.

In another aspect, the present disclosure provides a method for preparing the above-mentioned water heater inner tank. According to embodiments of the present disclosure, with reference to FIG. 2, the method comprises operations at blocks S100 to S300.

At block S100, the metallic pressure-bearing layer is pretreated.

In this step, the metallic pressure-bearing layer is pretreated to remove oil, dirt, and rust on a surface of the metallic pressure-bearing layer, enabling the polyethylene bonding layer to be well bonded to the metallic pressure-bearing layer.

At block S200, the polyethylene blends are loaded onto an inner side of the metallic pressure-bearing layer, placed into a rotational molding machine, and rotational molding is performed, to form the polyethylene bonding layer at the inner side of the metallic pressure-bearing layer.

According to some specific embodiments of the present disclosure, in this step, a temperature of the rotational molding may range from 220°C to 280°C (for example, 220°C, 230°C, 240°C, 250°C, 260°C, 270°C, or 280°C, etc.), and a duration of the rotational molding may range from 15 minutes to 35 minutes (for example, it may be 15 minutes, 20 minutes, 25 minutes, 30 minutes, or 35 minutes), and then the inner tank is cooled.

Before the polyethylene blends are loaded into the inner side of the metallic pressure-bearing layer, the polyethylene base resin, the polar material, and the antioxidant are first melt-blended under a condition of a temperature ranging from 130°C to150°C (for example, melt-blended in a twin-screw extruder), and then granulated to obtain the polyethylene blends.

At block S300, a material of the heat-resistant organic polymer anticorrosion layer is loaded onto an inner side of the polyethylene bonding layer, placed into the rotational molding machine, and the rotational molding is performed, to form the heat-resistant organic polymer anticorrosion layer at the inner side of the polyethylene bonding layer.

According to some specific embodiments of the present disclosure, in this step, a temperature of the rotational molding may range from 220°C to 280°C (for example, it may be 220°C, 230°C, 240°C, 250°C, 260°C, 270°C, or 280°C, etc.), and a duration of the rotational molding may range from 15 minutes to 35 minutes (for example, it may be 15 minutes, 20 minutes, 25 minutes, 30 minutes, or 35 minutes), and then the inner tank is cooled.

In the method for preparing the above-mentioned water heater inner tank according to the embodiments of the present disclosure, the prepared polyethylene bonding layer and heat-resistant organic polymer anticorrosion layer of the water heater inner tank are free of the pungent odor and can meet safety and hygiene requirements for bathing water. At the same time, due to the strong bonding between the metallic pressure-bearing layer and the polyethylene bonding layer of the water heater inner tank, no delamination occurs during the use, thereby meeting the service life requirements for the water heater inner tank. Moreover, the method is simple and easy to implement.

In a third aspect, the present disclosure provides a water heater. According to embodiments of the present disclosure, the water heater comprises the water heater inner tank according to the above embodiments or a water heater inner tank prepared by the method according to the above embodiments. Thus, the water heater has all the advantages of the water heater inner tank according to the above embodiments. Specifically, the polyethylene bonding layer and the heat-resistant organic polymer anticorrosive layer of the water heater inner tank of the water heater have no pungent odor, which can meet the safety and hygiene requirements for the bathing water; at the same time, due to the strong bonding between the metallic pressure-bearing layer and the polyethylene bonding layer of the water heater inner tan, no delamination occurs during the use, thereby meeting the service life requirements for the water heater inner tank. In this way, the consumers' needs can be further met.

Specifically, the above-mentioned water heater may be an electric water heater, or a solar water heater, etc.

The embodiments of the present disclosure will be described in detail below. It should be noted that the embodiments described below are exemplary only and intended to explain, rather than limiting, the present disclosure. In addition, all reagents used in the following embodiments are commercially available or can be synthesized according to the methods herein or known methods, unless otherwise specified. The reaction conditions, when not specified, are also readily obtained by those skilled in the art.

### Example 1

Example 1 provided a water heater inner tank. A method for preparing the water heater inner tank comprised operations as follows.
1) 80 g of linear low-density polyethylene LLDPE1802, 5 g of unsaturated polyester resin HS8706, and 0.1 g of antioxidant Irganox 1010 were extruded and granulated by a twin-screw extruder at 140°C and 75 rpm and ground, to obtain polyethylene blends.
2) A carbon steel welded inner tank having a thickness of 1.4 mm was subjected to a degreasing and rust removal treatment.
(3) The polyethylene blends were loaded onto an inner side of a carbon steel pressure-bearing layer and placed into a rotational molding machine, for performing rotational molding. A temperature of the rotational molding was 230°C, and a heating duration of the rotational molding was 25 minutes, and a cooling duration of the rotational molding was 15 minutes, to form a polyethylene bonding layer having a thickness of 1.5 mm at the inner side of the carbon steel pressure-bearing layer.
4) Polypropylene powder was loaded onto an inner side of the polyethylene bonding layer and placed into the rotational molding machine, for performing rotational molding. A temperature of the rotational molding was 230°C, and a heating duration of the rotational molding was 25 minutes, and a cooling duration of the rotational molding was 15 minutes, to form a heat-resistant organic polymer anticorrosion layer having a thickness of 2 mm at the inner side of the polyethylene bonding layer.

### Example 2

Example 2 provided a water heater inner tank, and a method for preparing the water heater inner tank comprised operations as follows.
1) 120 g of linear low-density polyethylene LLDPE1802, 8 g of epoxy resin E12, and 0.8 g of antioxidant Irganox 1010 were extruded and granulated by a twin-screw extruder at 140°C and 75 rpm and ground, to obtain polyethylene blends.
2) A carbon steel welded inner tank having a thickness of 1.5 mm was subjected to a degreasing and rust removal treatment.
(3) The polyethylene blends were loaded onto an inner side of a carbon steel pressure-bearing layer, and placed into a rotational molding machine, for performing rotational molding. A temperature of the rotational molding was 230°C, and a heating duration of the rotational molding was 25 minutes, and a cooling duration of the rotational molding was 15 minutes, to form a polyethylene bonding layer having a thickness of 1.2 mm at the inner side of the carbon steel pressure-bearing layer.
4) Polybutene powder was loaded into an inner side of the polyethylene bonding layer and placed into the rotational molding machine, for performing rotational molding. A temperature of the rotational molding was 230°C, and a heating duration of the rotational molding was 25 minutes, and a cooling duration of the rotational molding was 15 minutes, to form a heat-resistant organic polymer anticorrosion layer having a thickness of 1.8 mm at the inner side of the polyethylene bonding layer.

### Example 3

Example 3 provided a water heater inner tank, and a method for preparing the water heater inner tank comprised operations as follows.
1) 100 g of LLDPE1802, 10 g of epoxy resin E12, and 0.5 g of antioxidant Irganox 1010 were extruded and granulated by a twin-screw extruder at 140°C and 75 rpm and ground, to obtain polyethylene blends.
2) A carbon steel welded inner tank having a thickness of 1.65 mm was subjected to a degreasing and rust removal treatment.
(3) The polyethylene blends were loaded onto an inner side of a metallic pressure-bearing layer and placed into a rotational molding machine, for performing rotational molding. A temperature of the rotational molding was 230°C, and a heating duration of the rotational molding was 25 minutes, and a cooling duration of the rotational molding was 15 minutes, to form a polyethylene bonding layer having a thickness of 1 mm at the inner side of the metallic pressure-bearing layer.
4) Polycarbonate powder was loaded into an inner side of the polyethylene bonding layer and placed into a rotational molding machine, for performing rotational molding. A temperature of the rotational molding was 230°C, and a heating duration of the rotational molding was 25 minutes, and a cooling duration of the rotational molding was 15 minutes, to form a heat-resistant organic polymer anticorrosion layer having a thickness of 2 mm at the inner side of the polyethylene bonding layer.

### Example 4

Example 4 provided a water heater inner tank, and a method for preparing the water heater inner tank comprised operations as follows.
1) 100 g linear low-density polyethylene LLDPE1802, 8 g of polyolefin grafted with maleic anhydride (MA-LLDPE, with a grafting rate of 1.2 wt%), and 0.1 g of antioxidant Irganox 1010 were extruded and granulated by a twin-screw extruder at 140°C and 75 rpm and ground, to obtain polyethylene blends.
2) A carbon steel welded inner tank having a thickness of 1.8 mm was subjected to a degreasing and rust removal treatment.
(3) The polyethylene blends were loaded onto an inner side of a carbon steel pressure-bearing layer and placed into a rotational molding machine, for performing rotational molding. A temperature of the rotational molding was 230°C, and a heating duration of the rotational molding was 25 minutes, and a cooling duration of the rotational molding was 15 minutes, to form a polyethylene bonding layer having a thickness of 1.2 mm at the inner side of the carbon steel pressure-bearing layer.
4) Polypropylene powder was loaded onto an inner side of the polyethylene bonding layer and placed into the rotational molding machine, for performing rotational molding. A temperature of the rotational molding was 230°C, and a heating duration of the rotational molding was 25 minutes, and a cooling duration of the rotational molding was 15 minutes, to form a heat-resistant organic polymer anticorrosion layer having a thickness of 1.5 mm at the inner side of the polyethylene bonding layer.

### Comparative Example 1

1) 100 g of linear low-density polyethylene LLDPE1802, 1 g of peroxide crosslinking agent DCP, 10 g of epoxy resin E12, and 0.5 g of antioxidant Irganox 1010 were extruded and granulated by a twin-screw extruder at 140°C and 75 and ground, to obtain crosslinked polyethylene blends.
2) A carbon steel welded inner tank was subjected to a degreasing and rust removal treatment.
(3) The crosslinked polyethylene blends were loaded onto an inner side of a carbon steel pressure-bearing layer and placed into a rotational molding machine, for performing rotational molding. A temperature of the rotational molding was 230°C, and a heating duration of the rotational molding was 25 minutes, and a cooling duration of the rotational molding was 15 minutes, to form a PEXₐ inner lining at the inner side of the metallic pressure-bearing layer.

### Comparative Example 2

Comparative Example 2 differed from Example 3 merely in that no epoxy resin E12 was added. The others of Comparative Example 2 were the same as Example 3.

A peel strength (N/cm) for peeling the composite anticorrosion layer (i.e., the polyethylene bonding layer and the heat-resistant organic polymer anticorrosion layer) in Example 1 to Example 4 as well as Comparative Example 1 and Comparative Example 2 off from the carbon steel pressure-bearing layer was measured based on GB/T23257-2017. The test method was as follows: a strip having a width of 1 cm and a length greater than 20 cm was scratched on the composite anticorrosion layer of the inner tank product, and the scratch was deepened into a metallic component. An end of the strip was peeled off from the metallic component by at least 2 cm, and the strip was pulled with a tensile machine at a speed of 10 mm/min; a stress value of the tensile machine was read, and when the tensile force was stabilized, an average of the stabilized tensile force was taken as the peeling strength.

A method for detecting odor was as follows: five odor testers tested odor N₀ of a newly produced inner tank, odor Ng₂₄ of the inner tank after exposed in air for 24 hours, odor Ng₄₈ of the inner tank after exposed in the air for 48 hours, and odor N_{w} of the inner tank after subjected to water treatment. The odor was divided into six levels: 1 = no odor, 2 = slight odor, 3 = odor, but not pungent, 4 = pungent odor, 5 = strong pungent odor, and 6 = unbearable odor. Then, an average of the odor levels obtained by the five odor testers was calculated based on an equation of odor level N= (N1+N2+N3+N4+N5)/5. Test results are shown in Table 1.

**[Table 1]**

| | Peel strength (N/cm) | N₀ | Ng₂₄ | Ng₄₈ | N_{w} |
|---|---|---|---|---|---|
| Example 1 | 289.5 | 1.3 | 1.2 | 1.0 | 1.0 |
| Example 2 | 342.4 | 1.2 | 1.1 | 1.0 | 1.0 |
| Example 3 | 378.1 | 1.4 | 1.2 | 1.2 | 1.0 |
| Example 4 | 360.4 | 1.5 | 1.3 | 1.2 | 1.1 |
| Comparative Example 1 | 366.5 | 5.6 | 3.1 | 2.5 | 2.1 |
| Comparative Example 2 | <200 | 1.5 | 1.3 | 1.1 | 1.1 |

Table 1 reveal that, as for each of Examples 1 to 4, the peel strength was above 289.5 N/cm, the odor N₀ of the newly produced inner tank was below 1.5, the odor Ng₂₄ of the inner tank after exposed in air for 24 hours was below 1.3, the odor Ng₄₈ of the inner tank after exposed in the air for 48 hours was below 1.2, and the odor N_{w} of the inner tank after subjected to water treatment was below 1.1. Therefore, the water heater inner tanks of Examples 1 to 4 met the hygiene and safety requirements for the water heater inner tank.

Compared with Comparative Example 1, the odor of the inner tank prepared in Example 3 was significantly reduced in various states, indicating that the odor after omitting the addition of the crosslinking agent in Example 3 was significantly reduced.

Compared with Comparative Example 2, the peel strength of the polyethylene bonding layer prepared in Example 3 was significantly enhanced, indicating that the peel strength of the polyethylene bonding layer was significantly enhancing by adding the polar material. In this way, the service life requirements for the water heater inner tank were met.

Reference throughout this specification to "an embodiment," "some embodiments," "an example," "a specific example," or "some examples," means that a particular feature, structure, material, or characteristic described in connection with the embodiment or example is comprised in at least one embodiment or example of the present disclosure. The appearances of the above phrases in various places throughout this specification are not necessarily referring to the same embodiment or example of the present disclosure. Furthermore, the particular features, structures, materials, or characteristics may be combined in any suitable manner in one or more embodiments or examples. In addition, different embodiments or examples and features of different embodiments or examples described in the specification may be combined by those skilled in the art, unless they are contradictory to each other.

Although embodiments of the present disclosure have been shown and described above, it should be understood that above embodiments are merely illustrative and cannot be construed as limitations of the present disclosure. Those skilled in the art can make changes, alternatives, and modifications to these embodiments without departing from spirit, principles and scope of the present disclosure.

## Claims

1. A water heater inner tank, comprising:
a metallic pressure-bearing layer;
a polyethylene bonding layer disposed on an inner side of the metallic pressure-bearing layer and formed by a polyethylene blend, the polyethylene blend comprising 80 to120 parts by weight of polyethylene base resin, 2 to 15 parts by weight of a polar material, and 0.1 to 1 part by weight of an antioxidant; and
a heat-resistant organic polymer anticorrosion layer disposed on a side of the polyethylene bonding layer away from the metallic pressure-bearing layer.

2. The water heater inner tank according to claim 1, wherein a material of the heat-resistant organic polymer anticorrosion layer comprises at least one of polypropylene, polybutylene, and polycarbonate.

3. The water heater inner tank according to claim 1 or 2, wherein a thickness ratio of the polyethylene bonding layer to the heat-resistant organic polymer anticorrosion layer is (0.5 to 1.5):(1 to 2).

4. The water heater inner tank according to any one of claims 1 to 3, wherein the polyethylene bonding layer has a thickness ranging from 0.5 mm to 1.5 mm.

5. The water heater inner tank according to any one of claims 1 to 4, wherein the heat-resistant organic polymer anticorrosion layer has a thickness ranging from 1 mm to 2 mm.

6. The water heater inner tank according to any one of claims 1 to 5, wherein the metallic pressure-bearing layer has a thickness ranging from 1 mm to 2 mm.

7. The water heater inner tank according to any one of claims 1 to 6, wherein the polar material comprises at least one of isocyanate, acrylate, unsaturated carboxylic acid, polyolefin grafted with anhydride or ester derivative, epoxy resin, and unsaturated polyester resin.

8. The water heater inner tank according to any one of claims 1 to 7, wherein the antioxidant comprises at least one of pentaerythritol tetrakis[β-(3,5-di-tert-butyl-4-hydroxyphenyl)propionate) and 4,4'-thiobis(6-tert-butyl-3-methyl)phenol.

9. The water heater inner tank according to any one of claims 1 to 8, wherein a peel strength between the metallic pressure-bearing layer and the polyethylene bonding layer ranges from 285 N/cm to 380 N/cm.

10. A method for preparing a water heater inner tank according to any one of claims 1 to 9, the method comprising:
(1) pretreating the metallic pressure-bearing layer;
(2) loading the polyethylene blend onto an inner side of the metallic pressure-bearing layer, placing into a rotational molding machine, and performing rotational molding, to form the polyethylene bonding layer on the inner side of the metallic pressure-bearing layer; and
(3) loading a material of the heat-resistant organic polymer anticorrosion layer onto an inner side of the polyethylene bonding layer, placing into the rotational molding machine, and performing rotational molding, to form the heat-resistant organic polymer anticorrosion layer on the inner side of the polyethylene bonding layer.

11. The method according to claim 10, wherein in the step (2), a temperature of the rotational molding ranges from 220°C to 280°C, and a duration of the rotational molding ranges from 15 minutes to 35 minutes.

12. The method according to claim 10 or 11, wherein in the step (3), a temperature of the rotational molding ranges from 220°C to 280°C, and a duration of the rotational molding ranges from 15 minutes to 35 minutes.

13. A water heater, comprising a water heater inner tank according to any one of claims 1 to 9 or a water heater inner tank prepared by a method according to any one of claims 10 to 12.
